Europäisches Patentamt

European Patent Office

Office européen des brevets

(19)

(11) **EP 0 704 794 A1**

(12) **DEMANDE DE BREVET EUROPEEN**

(43) Date de publication:
03.04.1996 Bulletin 1996/14

(51) Int. Cl.⁶: **G06F 7/72**

(21) Numéro de dépôt: 95202526.0

(22) Date de dépôt: 19.09.1995

(84) Etats contractants désignés:
**DE FR GB**

(30) Priorité: **28.09.1994 FR 9411586**

(71) Demandeurs:
• **T.R.T. TELECOMMUNICATIONS RADIOELECTRIQUES ET TELEPHONIQUES**
**F-75013 Paris (FR)**
Etats contractants désignés:
**FR**

• **PHILIPS ELECTRONICS N.V.**
**NL-5621 BA  Eindhoven (NL)**
Etats contractants désignés:
**DE GB**

(72) Inventeur: **Naciri, Robert**
**F-75008 Paris (FR)**

(74) Mandataire: **Chaffraix, Jean**
**Société Civile S.P.I.D.**
**156, Boulevard Haussmann**
**F-75008 Paris (FR)**

(54) **Dispositif de calculs d'opérations modulaires et carte à puce comportant un tel dispositif**

(57)     Ce dispositif (1) est formé d'un microprocesseur (2), d'une mémoire (4) contenant le programme de fonctionnement d'une mémoire vive (3) et d'une mémoire (5) de type EEPROM. Il est, de manière avantageuse, équipé de deux unités de calculs (8 et 100) pour effectuer des multiplications. Ce dispositif est particulièrement apte pour effectuer des ospérations au sens de Montgomery. On propose, pour effectuer une exponentiation modulaire, d'opérer de la manière suivante :

$$(C^E)_{modN} = C^{*E} * R^{*E}$$

où $*$ est un multiplieur au sens de Montgomery,
et $C^{*E}$, $R^{*E}$ sont des exponentiations au sens de Montgomery,
$R = b^P$ avec b base de numération, P étant tel que R soit toujours un peu plus grand que les nombres à traiter.
Application : cryptage selon le procédé RSA.

FIG.1

## Description

La présente invention concerne un dispositif de calculs d'opérations modulaires utilisant le procédé de Montgomery pour effectuer une exponentiation modulaire :

$$C^E_{modN}$$

impliquant des multiplications au sens de Montgomery notées par le signe * et telles que :

$$A*B = (A \times B \times R^{-1})_{modN}$$

où :

- A et B sont les opérandes,
- R = b$^P$ b est la base de numération et P est tel que R soit toujours plus grand que les nombres à traiter,
- N est le module,
- R$^{-1}$ est défini à partir d'un nombre N' par la relation :

$$R \times R^{-1} - N \times N' = 1.$$

Le procédé de Montgomery dont il est question est décrit dans l'article "Modular Multiplication Without Trial Division" de P.L. Montgomery paru dans la revue MATHEMATICS OF COMPUTATION, Volume 44, N° 170 d'avril 1985, aux pages 519 à 521.

Un tel dispositif trouve d'importantes applications dans le domaine du chiffrement impliquant le procédé RSA décrit dans le brevet des Etats Unis d'Amérique N° 4 405 829.

La présente invention concerne aussi une carte à puce comportant un tel dispositif.

Le document de brevet EP 0 577 000 décrit une méthode qui implique les enseignements de Montgomery. Cependant pour être exploitée, cette méthode nécessite de modifier les applications impliquant le chiffrement RSA qui est communément utilisé. Il faut alors changer des procédures de communications de ces applications.

La présente invention propose un dispositif qui utilise des opérations au sens de Montgomery sans qu'il n'y ait à modifier les procédures déjà employées et sans trop employer de ressources supplémentaires, ce qui est primordial lorsque ce dispositif est incorporé dans une carte à puce pour laquelle les ressources sont limitées.

Pour cela, un tel dispositif est remarquable en ce qu'il comporte des moyens pour effectuer ladite exponentiation en effectuant :

$$C^E_{modN} = C^{*E} * R^E$$

où C$^{*E}$ est une exponentiation au sens de Montgomery.

La description suivante faite en regard des dessins ci- annexés, le tout donné à titre d'exemple non limitatif, fera bien comprendre comment l'invention peut être réalisée.

La figure 1 montre un dispositif conforme à l'invention.
La figure 2 montre une carte à puce contenant un dispositif conforme à l'invention.
La figure 3 montre l'occupation en mémoire provoquée par les opérations proposées par l'invention.

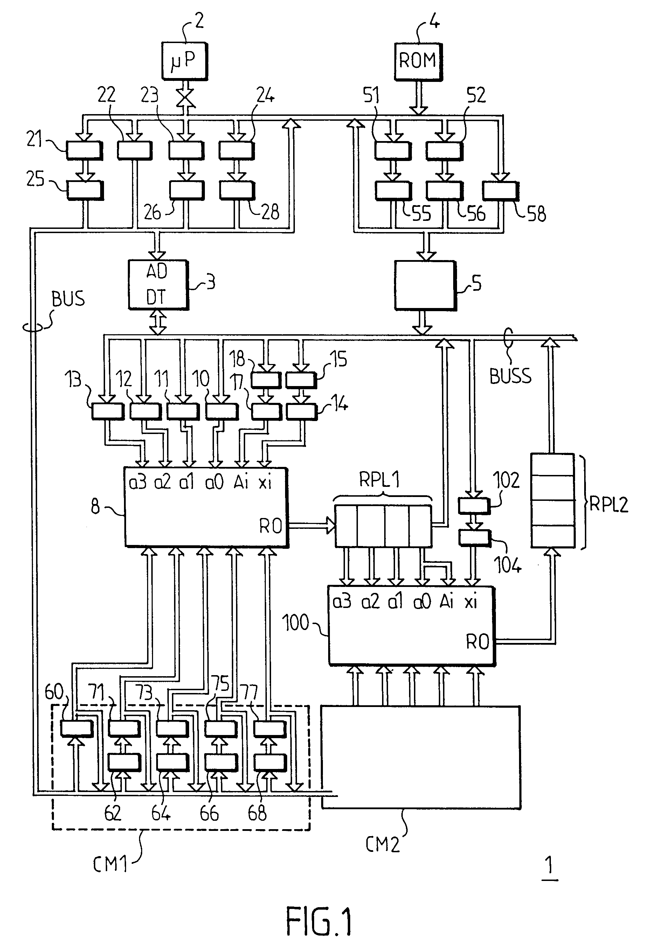

Le dispositif 1 de la figure 1 est constitué à partir d'un microprocesseur 2, d'une mémoire vive 3 munie d'une entrée pour code d'adresse AD et d'un accès pour l'entrée et la sortie des données DT, d'une mémoire morte 4 contenant notamment les instructions de fonctionnement pour la mise en application de l'invention et également d'une mémoire EEPROM 5 pour contenir différentes données, notamment le module N. Sur cette figure, ces différents éléments sont reliés par une première ligne commune BUS qui fonctionne en mode multiplexé, c'est-à-dire qu'elle transporte en certains moments des données et en d'autres des codes d'adresses. Le dispositif de la figure 1 comporte aussi une première unité de calcul 8 pour effectuer des multiplications avec ou sans cumul. Cette première unité 8 comporte un ensemble de quatre entrées a0, a1, a2 et a3 pour recevoir un opérande de quatre octets contenus dans des registres 10, 11, 12 et 13, une entrée x$_i$ reliée à des registres 14 et 15 pour un multiplicande à plusieurs octets, une entrée A$_i$, reliée à des registres 17 et 18 pour plusieurs octets à additionner et une sortie RO pour fournir le résultat. Différents opérandes proviennent de la mémoire vive 3 en passant par une deuxième ligne commune BUSS. Selon l'entrée à laquelle ces opérandes sont appliqués, on fait appel à des registres pointeurs 21, 22 et 23. Aux registres 21 et 23 sont associés des organes de décrémentation 25 et 26. Le registre 21 est relatif à l'opérande à appliquer à l'entrée A$_i$, le registre 22, aux opérandes à appliquer aux entrées a1, a2, a3 et a4 et le registre 23, à l'opérande à appliquer à l'entrée "x$_i$". Un autre

registre pointeur 24 avec son organe de décrémentation associé 28 est relatif à l'emplacement dans la mémoire 3 pour ranger le résultat fourni à la sortie RO. Quatre registres, montés en registre de pipe-line RPL1, sont prévus pour recevoir aussi des octets disponibles à la sortie RO. D'une manière similaire à la mémoire 3, des registres pointeurs 51 et 52 associés avec des organes de décrémentation 55 et 56 sont rattachés à la mémoire 5. Un registre supplémentaire 58 est aussi utilisé pour l'adressage.

L'unité de calcul 8 est commandée par un organe de commande CM1 formé de différents registres 60, 62, 64, 66 et 68. Les registres 71, 73, 75, 77 sont directement gérés par l'unité de calcul 8. Le registre 60 est un registre dans lequel sont emmagasinées des commandes pour l'unité 8 et des informations de statuts concernant les opérations effectuées par cette unité. Le registre 62 est utilisé pour la commande de l'unité de calcul 8. Le registre 64 sert à compter le nombre d'octets du résultat fourni à la sortie RO. Le registre 66 commande le début de l'inscription en mémoire 3 des informations disponibles à la sortie RO et offre la possibilité d'inhiber l'écriture dans la mémoire d'un certain nombre d'octets tandis que le registre 68 est prévu pour fixer les limites des opérandes appliqués aux entrées $A_i$ et $x_i$ c'est-à-dire leur nombre d'octets. Ce genre de dispositif est celui du composant PHILIPS P83C852. Mais comme les opérations proposées par l'invention s'effectuent au sens de Montgomery, différentes modifications peuvent être apportées. Ainsi, pour effectuer l'opération modulaire au sens de Montgomery, on a prévu une deuxième unité de calcul 100 de même structure que l'unité 8. Les entrées a0, a1, a2 et a3 de cette unité sont reliées aux sorties du registre RPL1 de même que l'entrée Ai. L'entrée d'opérande xi est reliée à la ligne commune BUSS par l'intermédiaire de deux registres 102 et 104. Cette unité 100 fournit aussi son résultat vers la ligne commune BUSS, via un deuxième registre RPL2. Un organe de commande CM2, de même structure que l'organe CM1, gère le fonctionnement de cette unité 100.

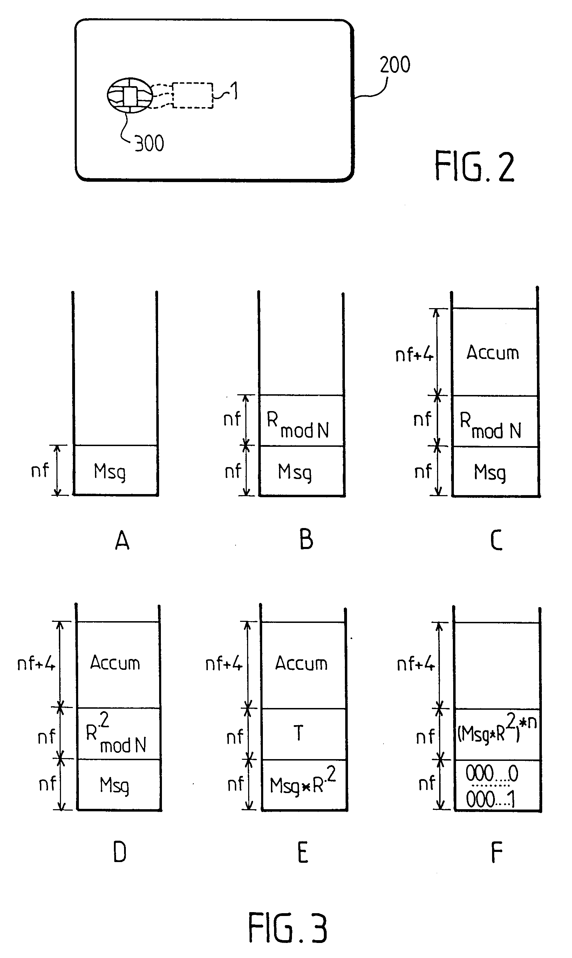

La figure 2 montre une carte à puce 200, son connecteur 300 et le dispositif de l'invention 1, qui apporte plus de puissance dans les calculs modulaires sans trop nécessiter de moyens supplémentaires.

Avant d'expliquer plus en détail l'invention, on va faire des rappels sur les opérations de Montgomery en utilisant les conventions suivantes :

- la multiplication modulo N est notée "."
- la multiplication au sens de Montgomery est notée "*"
- La multiplication conventionnelle est notée "×".

On va examiner successivement les opérations de multiplication et d'exponentiation au sens de Montgomery.

### a) La multiplication.

Une multiplication au sens de Montgomery consiste à évaluer la quantité :

$$A^*B = (A \times B \times R^{-1})_{modN} \tag{1}$$

où :

- A et B sont les opérandes,
- $R = b^P$ b est la base de numération et P est tel que R soit toujours plus grand que les nombres à traiter,
- N est le module,
- $R^{-1}$ est défini à partir d'un nombre N' par la relation :

$$R \times R^{-1} - N \times N' = 1 \tag{2}$$

L'évaluation de la quantité (1) peut être illustrée par :

$$A^*B \leftarrow \frac{A \times B + N \times k}{R} \tag{3}$$

on cherche une valeur entière de k qui donne une division juste et dont le résultat de la division est alors le produit de Montgomery recherché.

Il est à noter qu'il est très facile de savoir si la division tombe juste car, quelle que soit la valeur de R, le numérateur de (3) doit se terminer par zéro.

Or ce qu'il est utile d'obtenir, c'est le résultat de la multiplication modulo N. Pour cela, il faut à partir de la quantité (1) retrouver la quantité :

$$A.B = (A \times B)_{modN} \tag{4}$$

On effectue, alors l'opération :

EP 0 704 794 A1

$$(A^*B)^*(R^2{}_{modN}) = (A \times B){}_{modN} = a.b \tag{5}$$

Il convient donc de calculer $R^2$. Ceci peut être fait une fois pour toutes et emmagasiné dans une mémoire, puisque la base de numération ne change pas en principe pour une application donnée.

**b) L'exponentiation modulaire.**

Cette opération consiste à évaluer la quantité :

$$X^{.e} = \underbrace{X.X....X}_{e} \tag{6}$$

Au sens de Montgomery, on sait effectuer avec tous les avantages de la méthode :

$$X^{*e} = \underbrace{X*X*...*X}_{e} \tag{7}$$

Pour retrouver le résultat de l'exponentiation, on doit effectuer :

$$X^{.e} = X^{*e} * R^{.e} \tag{8}$$

En pratique, le facteur d'exponentiation "e" est grand et fait partie de la clé, dans les procédés de cryptage. L'évaluation de l'équation (8) est faite, selon l'art antérieur, par le calcul préalable de $R^{.e}$. Si on veut appliquer le procédé de Montgomery aux cartes à puce (smart cards), on est confronté au manque de mémoires de ces cartes. Il n'est guère possible d'emmagasiner $R^{.e}$ pour toutes les clés possibles.

Selon un aspect de l'invention, l'équation (8) est évaluée de la manière suivante :

$$X^{.e} = (X^*R^{.2})^{*e} * 1 \tag{9}$$

Pour la mise en application de ce qui vient d'être décrit ci-dessus, on met en oeuvre les procédures suivantes, écrites dans un langage qui s'adapte à tout langage de programmation. Ces procédures sont adaptées pour utiliser au mieux le multiplieur 32 bits du processeur précité.

Ainsi, pour l'estimation de $R^{.2}$ qui peut être évalué au moyen de la procédure :

```
PROCEDURE R_2 (R)

X₀ = 2R
pour i = 1 jusqu'à i = K
    Xᵢ = Xᵢ₋₁ * Xᵢ₋₁
RETOUR (Xₙ)

K est fixé par l'ordre tel que Xₙ = R·²
```

Cette procédure s'adapte parfaitement au cas où le nombre n d'éléments binaires des nombres à traiter est tel que :

n = 256, 512, 1024, 2048, etc...

n = 256, $R^2$ est obtenu dès le rang 8 car :

$$X_8 = 2^{(2^8)} R = R^2$$

4

$n = 512$, $R^2$ est obtenu dès le rang 9

$n = 1024$, $R^2$ est obtenu dès le rang 10, etc...

Certains cas complémentaires correspondant à n = 257, 513... méritent d'être signalés :

n = 257, le calcul de $R^2$ doit être interrompu au rang 8 et une opération supplémentaire est exécutée :

$$X_8 = 2^{(2^8)}R$$

$$Y = 2.2^{(2^8)}R = 2^{257}R = R^2$$

ainsi, l'opération supplémentaire consiste à décaler à gauche le résultat et à soustraire le module en cas de débordement, ce qui ne nécessite pas de ressource particulière.

n = 513, idem, mais au rang suivant :

$$X_9 = 2^{(2^9)}R$$

$$Y = 2.2^{(2^9)}R = 2^{513} = R^2$$

Les cas correspondant à n = 640 ou 768 nécessitent une astuce supplémentaire pour éviter le stockage intermédiaire, donc un débordement de l'espace de travail. Soit M le nombre dont on veut faire une exponentiation.

Dans un tel cas, $R^2_{modN}$ n'est pas directement calculé mais plutôt $M*R^2$.

Ainsi, pour n = 640, on écrit :

$$640 = 512 + 128 = 2^{(2^9)} + 2^{(2^7)}$$

on calcule $X_n$ jusqu'à l'ordre 7 :

$$X_7 = 2^{(2^7)}R$$

on effectue :

$$M_0 = M * X_7 = 2^{2^7}M$$

A la fin de cette étape, la mémoire de travail est occupée par :

- l'opérande M
- l'opérande $X_7$
- le résultat intermédiaire $M_0$

Comme M sera remplacé à terme par $M*R^2$, il suffit de faire, à la fin de cette étape :

$$M \leftarrow M*X_7$$

et de continuer le calcul de $X_9$.

A l'étape 9 on aurait donc :

$$X_9 = 2^{(2^9)}R$$

mais :

$$X_9 * M_0 = 2^{2^9}R * 2^{2^7}M = [2^{(2^9)} \times 2^{(2^7)} \times M \times R \times R^{-1}]_{modN}$$

c'est-à-dire : $X_9 * M_0 = 2^{640}.M = M.R = M*R^2$

pour n = 768 on écrit :

$$768 = 512+256$$

et l'on mène le calcul comme pour le cas ci-dessus, en commençant par évaluer :

$$X_8 = 2^{(2^8)}R$$

et l'on obtient :

$$M_0 = M * X_8 = 2^{(2^8)}M$$

La procédure qui donne N' est la suivante.

```
            PROCEDURE MONTGO_COEFFO (N, LEN_BIT)

début
    K=0; N'=0
    tant que K < LEN_BIT
        début
            I= N'/2^K
            si  (I = 0) {N' = N'+Nx2^K} // en fait on teste 1 bit
            K = K + 1
        fin
    fin
RETOUR(N')
```

LEN_BIT est le nombre de bits significatifs que l'on souhaite obtenir de N'. En pratique, cette précision est limitée par la taille du multiplieur de base de la cellule de calcul (unité 8 ou unité 100). Actuellement, cette précision est limitée à 32 bits (cf.P83C852). On notera que l'opération : $N'x2^K$ n'est qu'une simple opération de décalage. La multiplication au sens de Montgomery est :

```
PROCEDURE MULT_MONTG(MPC, MPY, N'[O], N)

début
    ACCU = O
    TEMP = ?
    pour i = 1 jusqu'à n
        début
        ACCU = ACCU + MPC × MPY[i]        // ...............(a)
        TEMP = LOW (N'[O] × ACCU[O])      // ...............(b)
        ACCU = ACCU + TEMP × N            // ...............(c)
        ACCU = ACCU/10...                 // 10... est égal à
                                          // la longueur du mot
                                          // et correspond à un
                                          //décalage  vers
                                          // la droite.
        si ACCU ≥ N { ACCU = ACCU - N }
        fin
fin
RETOUR (ACCU)
```

Dans cette procédure, la multiplication est effectuée sur la base de mots formés d'un certain nombre d'éléments binaires (32 dans le cas du processeur précité). MPC est le multiplicande, MPY est le multiplicateur, N'[O] est le mot représentant les poids faibles de N', m est le nombre de mots qui composent les opérandes MPC et MPY qui ont en pratique des longueurs comparables.

a) Cette écriture condensée sous entend une multiplication suivie d'une accumulation d'une donnée à m mots par le mot courant du multiplicateur MPY.
b) Dans le cadre du processeur envisagé, on peut commencer la multiplication dès que le mot le moins significatif de ACCU est formé, ce qu'indique la fonction LOW() pour dire que l'on prend le mot de poids faible.
c) Cette opération se déroule donc, dans un cycle de retard, sur celle indiquée par (a) en tenant compte de (b).

L'exponentiation au sens de Montgomery est donnée par la procédure suivante :

```
              PROCEDURE EXP_MONT(M, E, N)

début
VAR1 = 1
N'[O] = MONTGO_COEFFO(N,LEN_BIT)
    pour i = 1 jusqu'à n
    début
        VAR1 = MULTI_MONTG(VAR1, VAR1, N'[O], N)
        si (E[i] = 1) {
              VAR1 = MULT_MONTG(VAR1, M, N'[O], N)
                              }
    fin
fin
RETOUR(VAR1)
```

Ici, $M^{*E}$ est calculé.

Avec ces procédures ainsi définies, on peut obtenir les multiplications modulaires Euclidienne.

```
            PROCEDURE MULTI_EUCL(MDD, MRR, NN)

début
    NN'[O] = MONTG_COEFFO(NN, LEN_BIT)
    A = MULTI_MONTG(MDD, MRR, NN'[O], NN)
    RR = R_2(R)
  MEUCL = MULTI_MONTG(A,RR, NN'[O], NN)
fin
RETOUR(MEUCL)
```

Dans cette procédure, MDD et MRR sont les opérandes, NN le module, LEN_BIT est défini ci-dessus.
On a de manière particulièrement avantageuse, l'exponentiation modulaire euclidienne.

```
                  PROCEDURE EXP_EUCL(CC, EE, n)

début
    RR = R_2(R)
    VAR3 = MULTI_MONTG(CC, RR, NN'[O], n)
    A =  EXP_MONTG(VAR3, EE, n)
    A = MULTI_MONTG(A, 1, NN'[O], n)
fin
RETOUR(A)
```

Ici, on effectue $CC^{\cdot EE}$

Il est à noter qu'il est aussi possible d'adapter les techniques spéciales de Normalisation-Dénormalisation au cas de Montgomery, comme mentionnées dans la demande de brevet N° EP-0 610 996. Ces opérations ne nécessitent aucune ressource additionnelle. Par exemple, si l'on choisit un nombre Nb sur 32 éléments binaires pour le module, la partie la moins significative sera : $2^{32} - 1$, soit en hexadécimal : FF FF FF FF. Ceci est obtenu en multipliant le module N par N'[O] donné par la procédure MONTGO_COEFFO.

Le dispositif de la figure 1 est bien adapté à la technique de calcul de Montgomery qui vient d'être décrite. En effet, il rend possible de réaliser presque simultanément les deux opérations suivantes :

a) multiplication partielle + accumulation,
b) réduction au sens de Montgomery + décalage à droite relativement au module normalisé (du côté des poids faibles).

Pour pouvoir enchaîner les calcul, le pointeur APR contenu dans le registre 22 est décrémenté de 4 unités. L'unité 100 démarre avec 4 cycles de retard pour permettre le traitement de l'opération de réduction au sens de Montgomery. De ce fait le bit CMD du registre de commande 62 de l'organe CM2 est utilisé pour activer ou non l'unité 100. L'unité 8 conserve l'accès au bus de sortie BUSS lorsque l'unité 100 est désactivée. Ceci sera particulièrement utile pour le processus de Normalisation-Dénormalisation décrit dans la demande de brevet précitée.

Dans ce qui suit, on fait des considérations sur l'encombrement mémoire des exponentiations modulaires. Le calcul d'une multiplication modulaire MULTI_MONTG nécessitera une mémoire tampon de $(3n_f+4)$ octets, soit 196 octets pour une multiplication impliquant des nombres de 512 éléments binaires.

$n_f$ = nombre d'octets composant les nombres à traiter.

Le calcul de N'[O] nécessite en moyenne 16 additions sur 32 éléments binaires en n'utilisant que le CPU seul.

La figure 3 illustre l'occupation mémoire du dispositif.

La partie A de cette figure 3 montre que la mémoire est occupée sur $n_f$ octets par le message : Msg égal à C au début du calcul de l'exponentiation.

La partie B montre que $R_{ModN}$ est introduite dans la mémoire sur $n_f$ octets aussi. On remarquera que :

$R_{ModN} = \overline{N}$, $\overline{N}$ étant le complémentaire de N.

La partie C montre l'occupation faite par accumulation (Accum) pour le calcul de $R^2_{ModN}$, soit $2n_f+4$ octets.

La partie D montre l'occupation faite par accumulation Accum) pour le calcul de $M_{sg}*R^2_{ModN}$.

La partie E montre l'occupation faite par accumulation pour le calcul de l'exponentiation par carré et multiplications successives en utilisant T qui est un tampon provisoire et Accum.

La partie F montre le positionnement de la valeur 1 en précision multiple pour obtenir le résultat final.

$$A^{\cdot E} = (A*R^2)^{*E}*1.$$

Comme dans le cas du P83C852 appliqué à la conception du noyau de calcul de la carte à puce, il existe une certaine dualité entre les coefficients de normalisation au sens du 852 et ceux au sens de Montgomery.

Il est estimé que pour des environnements à ressources mémoires limitées, tels que la carte à puce, le calcul en temps réel ne consomme que quelques pourcents des performances.

Ainsi donc, l'exponentiation modulaire dans une architecture de Montgomery se ramène à la séquence suivante :

a) - <u>Calcul de $R^2 \bmod N$</u> à l'aide de la seule architecture de Montgomery :

* pour n = 512 = $2^9$ moins de 9 multiplications sur 768 en moyenne sont nécessaires
* pour n = 1024 = $2^{10}$ moins de 10 multiplications sur 1536 (= 1024+512) en moyenne sont nécessaires.

b) - <u>Calcul de l'exponentiation</u> au sens de Montgomery,
c) - <u>Multiplication</u> au sens de Montgomery par la constante 1, soit :
pour n = 512 bits, moins de 10 multiplications au sens de Montgomery, sur une moyenne de 768, sont nécessaires, ce qui ne dégrade les performances que d'un facteur de 1 % pour le cas de 512 bits.

**Tableau comparatif** :

On effectue une comparaison avec le P83C852 cadencé à 6 MHz. A titre indicatif, une amélioration telle que montrée à la figure 1 conduit au tableau suivant :

| Exponentiation à 512 bits | PC83C852 à 6 MHz | (figure 1) | |
|---|---|---|---|
| | | 6 MHz | 32 MHz |
| Classique | 1,5 secondes | 900 ms | 170 ms |
| TRC | 470 ms | 282 ms | 52 ms |
| TRC : théorème du reste chinois. | | | |

Naturellement, tout ceci devrait s'accompagner de certaines améliorations technologiques telles que :

- le découplage de la cellule de calcul (ou du co-processeur) vis-à-vis de la RAM,
- une fréquence bien étudiée pour l'horloge cadençant le dispositif de calcul,
- l'amélioration de la technique EEPROM.

Il va de soi que les calculs au sens de Montgomery peuvent être effectués au moyen de n'importe quel processeur muni, de préférence, d'une unité de calcul pour la multiplication.

ANNEXE.

CONSIDERATIONS THEORIQUES SUR L'INVENTION.

En principe, R est la puissance de la base immédiatement supérieure au module N. On suppose par la suite que l'opérateur M3 est celui de la multiplication modulaire au sens de Montgomery. Nous analyserons succinctement les conséquences de l'incorporation de l'opérateur M3 pour la réalisation des opérations pures de multiplication et d'exponentiation modulaire en multiple précision et les conséquences dans le domaine des composants encartables.

Si on désigne par Zn l'ensemble des entiers modulo n, et Zn* les éléments de Zn premiers avec n, on sait que l'opération de multiplication modulaire définit une permutation sur $Z_n^*$. On peut en fait vérifier qu'il en est de même de l'opérateur M3 et que les deux sont donc isomorphes. Cette dernière remarque a en fait une incidence importante sur la recherche de méthodes de calculs performants sur Zn. D'une manière générale, on considère le diagramme suivant où E et F sont des groupes isomorphes.

$$
\begin{array}{ccc}
 & h & \\
E & \longrightarrow & F \\
g\downarrow & & \downarrow g^* \\
E & \longrightarrow & F \\
 & h &
\end{array}
$$

Toutes les propriétés de g se transportent, sous l'action de l'isomorphisme h, et se transmettent ainsi à l'application induite $g^*$.

L'isomorphisme h correspond à ce que Montgomery appelle la conversion "N-résidu" qui, à chaque x, associe xR(modN).

En fait, toute ceci nécessite une reformulation correcte en terme algébrique.

On considère les groupes algébriques suivants :

E = (Zn,.) muni de la multiplication modulaire euclidienne,

F = (Zn,⋆) muni de la multiplication modulaire au sens de Montgomery,

c'est-à-dire : $a \star b = (a \times b \times R^{-1})_{\mathrm{mod}\ N}$

On définit h de la manière suivante :

$h(x) + x \star R^{-2}$

On peut aisément vérifier que h est bien un isomorphisme du groupe E dans le groupe F dont l'élément neutre n'est autre que $h(1) = R$.

PROPRIETES FONDAMENTALES.

(a) : $1 \star 1 = R^{-1}$

(b) : $2^n R \star 2^m R = 2^{n+m}.R$

(c) : $x^n = (x \star R^{-2})^{\star n} \star 1$ et $x^n = x^{\star n} \star R^n$

(d) : $(R^{-2})^{\star e} = R^{-(e+1)}$

APPLICATIONS.

**Calcul de $R^2_{\mathrm{mod}\ N}$** à l'aide d'un multiplieur de Montgomery :

Il suffit d'appliquer la formule (b) à la donnée initiale $X_0$ définie par :

$X_0 = 2.R$ et $X_i = X_{i-1} \star X_{i-1}$

jusqu'à l'ordre n tel que $X_n = R^{-2}$.

Si $R = 2^n$, l'algorithme ne nécessite que n étapes successives (7 à 9 étapes pour 512 bits).

**Calcul de l'exponentielle modulaire pure** à l'aide d'un multiplieur de Montgomery.

La commutativité du diagramme précédent appliqué à la fonction $g(x) = x^e_{\mathrm{mod}\ N}$, montre deux méthodes d'évaluation complétant (c) :

$h \circ g(x) = g^\star \circ h(x)$

soit : $x^e_{\mathrm{mod}\ N} \star R^{-2} = (x \star R^{-2})^{\star e}$

En multipliant par 1, on obtient :

$$x^{-e} = (x \star R^{-2})^{\star e} \star 1 \qquad\qquad (A-10)$$

En appliquant (d) :

$$x^{-e} = x^{\star e} \star (R^{-2})^{\star e} \star 1 = x^{\star e} \star R^{-(e+1)} \star 1$$

soit : $\qquad x^{-e} = x^{\star e} \star R^e \qquad\qquad (A-11)$

Remarques :

La forme (A-10) est plus adaptée aux environnements ayant des ressources mémoires limitées, le calcul en temps

réel ne consommera que 1 % de performances, mais possède le mérite de n'utiliser que les moyens de calculs induits par la méthode de Montgomery. C'est le cas de la carte à puce, ou souvent, plusieurs clés coexistent en mémoire EEPROM. En pratique, on exige quatre à cinq clés.

La forme (A-11), plus performante, est plutôt réservée aux implémentations sur les serveurs et nécessitera la présence de la constante précalculée $R^e$.

**Tests de primalité** à l'aide d'une architecture de Montgomery.

La commutativité du diagramme permet de ramener tous les problèmes de recherche de nombres premiers d'un groupe algébrique à un autre en transportant les équations de FERMAT par l'isomorphisme h.

Ainsi :       $X^{p-1} = 1$

se traduit, dans une architecture de Montgomery, par :

$$X^{\star(p-1)} = R.$$

## Revendications

1. Dispositif de calculs d'opérations modulaires utilisant le procédé de Montgomery pour effectuer une exponentiation modulaire :

$$C_{modN}^{E}$$

comportant des moyens de multiplications au sens de Montgomery pour exécuter l'opération suivante :

$$A^{*}B = (A \times B \times R^{-1})_{modN}$$

ou :

- * est le signe de la multiplication au sens de Montgomery,
- A et B sont les opérandes,
- $R = b^P$ b est la base de numération et P est tel que R soit toujours plus grand que les nombres à traiter,
- N est le module,
- $R^{-1}$ est défini à partir d'un nombre N' par la relation :

$$(R \times R^{-1} - N \times N')_{modN} = 1,$$

caractérisé en ce qu'il comporte des premiers moyens pour partager ladite exponentiation en deux quantités P1 et P2 et en ce que les opérandes pour les moyens de la multiplication au sens de Montgomery sont P1 et P2 :

$$C_{modN}^{E} = P1^{*}P2$$

2. Dispositif de calculs d'opérations modulaires selon la revendication 1, caractérisé en ce qu'il comporte des deuxièmes moyens pour élaborer la première quantité P1 en agissant sur les moyens de multiplications au sens de Montgomery pour obtenir :

$$P1 = C^{*E}$$

et des troisièmes moyens pour effectuer l'opération suivante pour obtenir P2 :

$$P2 = R^{E}$$

3. Dispositif de calculs d'opérations modulaires selon la revendication 1, caractérisé en ce qu'il comporte des quatrièmes moyens pour élaborer la première quantité P1 en agissant sur les moyens de multiplications au sens de Mon- tgomery pour obtenir :

$$P1 = (C*R^{2})^{*E}$$

et en ce que P2 est choisi tel que :

$$P2 = 1$$

4. Dispositif de calculs d'opérations modulaires selon la revendication 1 ou 3, caractérisé en ce que pour calculer $R^2$, il comporte des cinquièmes moyens pour effectuer :

- le calcul de $bR_{ModN}$ à identifier à $X_0$
- et K fois le calcul à partir de $X_0 = R^{2}$ :

$$X_i = X_{i-1}*X_{i-1}.$$

5. Carte à puce comportant un dispositif de calcul d'opérations modulaires selon l'une des revendications 1 ou 4 et un connecteur rattaché au dispositif de calcul.

FIG.1

FIG. 2

FIG. 3

**Office européen des brevets**

**RAPPORT DE RECHERCHE EUROPEENNE**

Numero de la demande

EP 95 20 2526

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 566 498 (FORTRESS) <br> * page 1, ligne 1 - ligne 5 * <br> * page 1, ligne 21 - ligne 23 * <br> * page 12, ligne 10 - ligne 46 * <br> --- | 1-5 | G06F7/72 |
| X | EP-A-0 531 158 (CANON) <br> * page 26, ligne 51 - page 27, ligne 18 * <br> --- | 3 | |
| A | IEEE, PROCEEDINGS ON THE 11TH SYMP. ON COMP. ARITHMETIC , <br> 1993 WINDSOR, ONT., CANADA, <br> pages 252-259, XP 000419946 <br> SHAND ET AL  'Fast Implementations of RSA Cryptography' <br> * alinéa 4.1: 'Algorithm 2' * <br> ----- | 1 | |

**DOMAINES TECHNIQUES RECHERCHES (Int.Cl.6)**

G06F

Le présent rapport a été établi pour toutes les revendications

| Lieu de la recherche | Date d'achèvement de la recherche | Examinateur |
|---|---|---|
| LA HAYE | 3 Octobre 1995 | Cohen, B |

### CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)